# EUROPEAN PATENT APPLICATION

(11) **EP 2 458 852 A1**
(43) Date of publication of application: **30.05.2012**
(21) Application number: 11191323.2
(22) Date of filing: 30.11.2011
(51) Int. Cl.: H04N 5/775, H04N 5/85, H04N 21/436, H04N 21/488, H04N 21/426, H04N 21/4363

(54) **Image display equipment comprising a disc loader and connected to an external reproduction equipment**

(30) Priority: 30.11.2010 JP 2010266476
(71) Applicant: Funai Electric Co., Ltd., Daito-shi Osaka 574-0013 (JP)
(72) Inventor: Tsukamoto, Keisuke, Daito-shi, Osaka 574-0013 (JP); Horimoto, Masaki, Daito-shi, Osaka 574-0013 (JP); Kunita, Yoshiyuki, Daito-shi, Osaka 574-0013 (JP); Eto, Kentaro, Daito-shi, Osaka 574-0013 (JP)
(74) Representative: Grünecker, Kinkeldey, Stockmair & Schwanhäusser

(57) **Abstract**

A TV receiver which is connected to a BD player via a HDMI cable. The TV receiver comprises a display and a BD loader. When the BD player receives the command to perform a reproduction, the BD player transmits the CEC command for instructing the TV receiver to turn the power on. The TV receiver detects whether or not a BD disc is put in the BD loader. As a result of the detection, when the BD disc is put in the BD loader and also when the display can display a superimposed image, the TV receiver displays image contents read out from the BD disc on the display. Subsequently, the TV receiver displays a message which prompts the user to select whether or not to eject the BD disc. When "YES" is selected, the TV receiver ejects the BD disc.

## Description

### BACKGROUND OF THE INVENTION

### Field of the Invention

The present invention relates to an image display equipment which can be connected to an external equipment compatible with HDMI (High-Definition Multimedia Interface) standard.

### Description of the Related Art

In recent years, a TV (television) receiver which can be connected to an external equipment compatible with HDMI standard (referred to as the HDMI equipment hereinafter) is widely used. The HDMI equipment and the TV receiver are connected via an HDMI cable, and control each other by control signals (referred to as the CEC command hereinafter). For example, when the TV receiver receives the CEC command to instruct a power-on, a display of contents, or the like from a player equipment (the HDMI equipment), the TV receiver operates in accordance with the instruction of the CEC command.

Besides, in recent years, in the above conventional TV receiver, a TV receiver provided with a built-in optical disc drive (referred to as the built-in drive TV receiver hereinafter) is widely used. This type of the built-in drive TV receiver can display contents reproduced in the built-in optical disc drive. Moreover, the built-in drive TV receiver can also display contents supplied from the player equipment via the HDMI cable as well as the conventional TV receiver. That is to say, a user can reproduce the optical disc in the built-in drive TV receiver or the player equipment. However, when reproducing the optical disc which has been already put into the built-in drive TV receiver or the player equipment, the user often forgets which of them the optical disc is attached put into. Accordingly, when the user often instructs the player equipment to reproduce an optical disc in the situation where an optical disc which stores desired contents is put in the built-in drive TV receiver, unintended contents are reproduced. Thus, the user cannot watch and listen to the desired contents. In this case, the user requires time and effort to find the optical disc which stores the desired contents.

Japanese Laid-Open Patent Publication No. 2006- 314015 discloses another built-in drive TV receiver. In the TV receiver, when a DVD is put into the built-in optical disc drive in turning on a power key, a microprocessor displays a mark indicating that the DVD is in the built-in optical disc drive on a monitor screen in form of OSD (On Screen Display) based on a disc presence/absence data stored in a EEPROM (Electrically Erasable Programmable Read Only Memory). Thus, the TV receiver can prevent a user from trying to put the DVD into the built-in optical disc drive redundantly by mistake. This TV receiver can provide the user with the information that the DVD has been already put into the built-in optical disc drive. However, when the user reproduces a DVD in the external equipment which is connected to the TV receiver, the user cannot recognize that the DVD has been already put into the built-in drive TV receiver, so that the above problem cannot be solved.

Moreover, Japanese Laid-Open Patent Publication No. 2000-132900 discloses an audio system. In the audio system, when a CD (compact disc) player is turned on, a receiver transmits a disc presence/absence data stored in a built-in memory to the CD player. And then, when a CD is in the CD player, a controller of the CD player makes a display unit display "DISC" to provide a user with the information that the CD has been already put inside. However, even in this audio system, when the user reproduces a CD in the external equipment, the user cannot recognize that the CD has been already put into the built-in drive TV receiver, so that the above problem cannot be solved.

### BRIEF SUMMARY OF THE INVENTION

The present invention is to solve the problem described above, and an object of the present invention is to provide an image display equipment which enables a user to easily confirm that an optical disc has been already put into an optical disc loader in an image display equipment when the user instructs an external reproduction equipment to reproduce an optical disc, so that it can reduce time and effort of the user required for finding the optical disc which stores desired contents and can further prevent the user from forgetting to eject the optical disc which is put into the disc loader.

According to an aspect of the present invention, this object is achieved by an image display equipment, which is connected to an external reproduction equipment reproducing an optical disc and supplying contents of the optical disc, comprising: a transmitting and receiving means which not only receives the contents but also transmits and receives a control command based on a control protocol to and from the external reproduction equipment; a display means which displays an image including an image of the contents and various messages; an information means which informs a user of various messages; a disc loader to which an optical disc is put inside to read out contents from the optical disc; and a control means which controls units in the image display equipment.

The image display equipment further comprises a disc detection means which detects whether or not the optical disc is put in the disc loader.

In the case where an optical disc put in the disc loader is detected by the disc detection means when the transmitting and receiving means receives from the external reproduction equipment a control command for instructing to display on the display means the image of the contents of the optical disc, which is supplied from the external reproduction equipment, the control means informs the user that the optical disc is put in the disc loader using the information means.

With the above described configuration, in the case where the optical disc put in the disc loader is detected when the transmitting and receiving means receives from the external reproduction equipment the control command for instructing to display the image of the contents of the optical disc, which is supplied from the external reproduction equipment, the user is informed that the optical disc is put in the disc loader in the image display equipment. Thus, the user can recognize whether or not the optical disc is put in the disc loader in the image display equipment when reproducing the optical disc on the external reproduction equipment, so that the image display equipment of the present invention can make it possible to reduce time and effort of the user required for finding the optical disc. Moreover, it can prevent the user from forgetting to eject the optical disc which is put in the disc loader in the image display equipment.

Preferably, in the case where an optical disc put in the disc loader is detected by the disc detection means when the transmitting and receiving means receives from the external reproduction equipment a control command for instructing to display the image of the contents of the optical disc on the display means, the control means reproduces the optical disc put in the disc loader to display the image of the contents of the optical disc on the display means.

According to this configuration, in the case where the optical disc put in the disc loader is detected, the image display equipment reproduces the optical disc and displays the image of the contents. Thus, the user can easily confirm what kind of contents the optical disc, which is put in the disc loader, stores, so that the image display equipment can make it possible to further reduce the time and the effort of the user required for finding the optical disc which stores the desired contents.

The control protocol can be HDMI (High Definition Multimedia Interface)- CEC (Consumer Electronics Control).

The image display equipment can be a television receiver.

### BRIEF DESCRIPTION OF THE DRAWINGS

The present invention will be described below with reference to the annexed drawings. It is to be noted that all the drawings are shown for the purpose of illustrating the technical concept of the present invention or embodiments thereof, wherein:
FIG 1 is a schematic configuration diagram of a home network system including a TV (television) receiver according to a preferred embodiment of the present invention and a BD (blu-ray disc) player which is connected to the TV receiver;
FIG. 2 is a block diagram illustrating an internal configuration of the TV receiver and the BD player;
FIG. 3 is a flow chart illustrating a process of a disc detection processing in the TV receiver;
FIG. 4 is a diagram illustrating an example of a message to select a disc ejection displayed on a display of the TV receiver;
FIG. 5 is a diagram illustrating another example of the message to select the disc ejection displayed on the display of the TV receiver; and
FIG. 6 is a flow chart illustrating a process of CEC (Consumer Electronics Control) command processing in the disc detection processing.

### DETAILED DESCRIPTION OF THE INVENTION

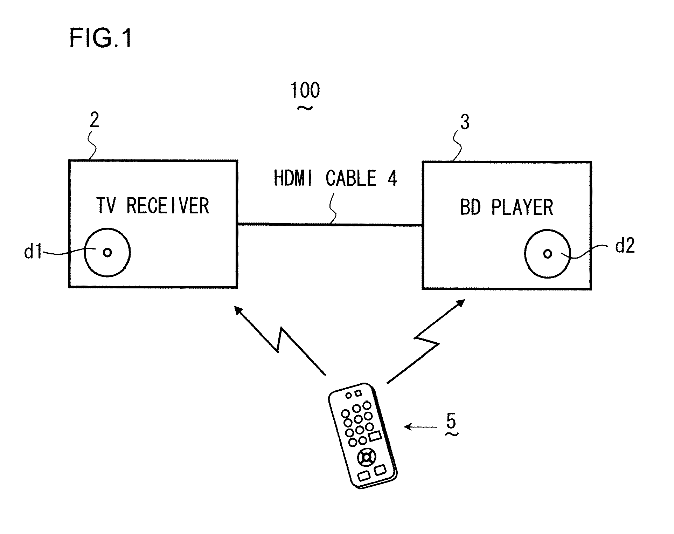

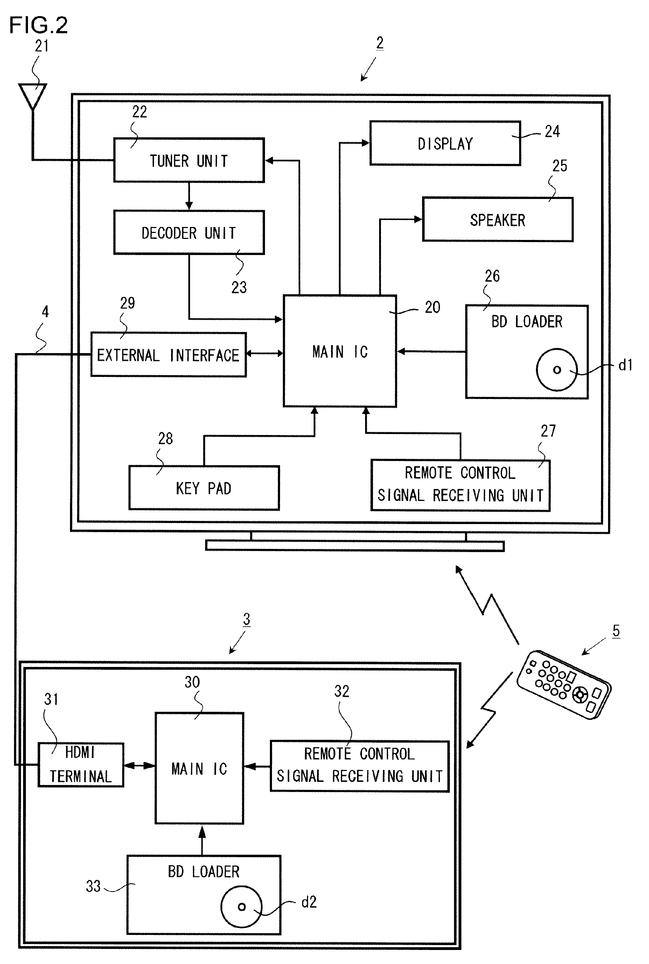

A TV (television) receiver according to a preferred embodiment of the present invention (an image display equipment in claims) is described with reference to FIGS. 1 and 2. FIG. 1 shows a schematic configuration of a home network system 100 which includes a TV receiver 2 and a BD (blu-ray disc) player (an external reproduction equipment) 3 connected to the TV receiver 2 via a HDMI (High-Definition Multimedia Interface) cable 4. FIG. 2 shows an internal configuration of the TV receiver 2 and the BD player 3.

Both the TV receiver 2 and the BD player 3, which are compatible with HDMI, can transmit and receive a CEC command based on HDMI-CEC (Consumer Electronics Control) and response data for the CDC command.

The HDMI cable 4 includes a TMDS (Transition Minimized Differential Signaling) line, which is a transmission line of image signals, audio signals, and so on, and a CEC line, which is a transmission line to bi-directionally transmit the CEC command.

The TV receiver 2 can reproduce a BD disc (an optical disc) d1 put inside and output an image and audio of contents in the BD disc d1. The BD player 3 can reproduce a BD disc (an optical disc) d2 put inside, and supply contents in the BD disc d2 to the TV receiver 2 via the HDMI cable 4.

The remote controller 5 has plural buttons including a reproduction button (not shown) and an equipment switching button (not shown). The remote controller 5 is used to operate the TV receiver 2 and the BD player 3 by transmitting infrared signals based on an operation by a user to the TV receiver 2 and the BD player 3. The equipment switching button is used to switch between the TV receiver 2 and the BD player 3. In particular, when the user pushes the equipment switching button to select the operation of the BD player 3 and then pushes the reproduction button, for example, the remote controller 5 transmits the infrared signals including an identification code of the BD player 3 and an instruction code to instruct the reproduction.

As shown in FIG. 2, the TV receiver 2 includes a tuner unit 22 which is connected to an antenna 21 and receives digital broadcast signals, a decoder unit 23, a display (a display means and an information means) 24 which displays an image, a speaker 25 which outputs audio, a BD loader (a disc loader) 26, and a remote control signal receiving unit 27 which receives infrared signals transmitted from the remote controller 5. Moreover, the TV receiver 2 further includes a key pad 28 which has plural buttons operated by the user, an external interface (a transmitting and receiving means) 29, and a main IC (Integrated Circuit) (a control means and a disc detection means) 20 which controls the various units in the TV receiver 2.

The tuner unit 22 receives the digital broadcast signals of respective channels distributed from broadcast stations via the antenna 21. The digital broadcast signals include image signals and audio signals of a TV program, and program information such as a broadcast starting time, a broadcast ending time, a category, a title, a cast, or the like of the distributed TV program.

The decoder unit 23 performs a processing such as demodulation, correction, or the like of the digital broadcast signals received by the tuner unit 22. The decoder unit 23 is made up of a TS (Transport Stream) conversion circuit (not shown) which demultiplexes a necessary TS packet from multiplexed signals, an image decode circuit (not shown) which decodes the respective demultiplexed TS packets, an audio decode circuit (not shown), a data decode circuit (not shown), and so on.

The image decode circuit decodes the TS packet including the image signals, extracts the image signals, and outputs the extracted image signals to the main IC 20. The audio decode circuit decodes the TS packet including the audio signals, extracts the audio signals, and outputs the extracted audio signals to the main IC 20.

The data decode circuit decodes the TS packet including SI (Service Information) data, extracts the SI data, and outputs the extracted SI data to the main IC 20. The SI data has EIT (Event Information Table), which stores the program information of the TV program, and so on.

The display 24 displays an image of the TV program received by the tuner unit 22, an image of the contents in the BD disc d1 read out by the BD loader 26, or an image of contents supplied from the BD player 3. Moreover, the display 24 can also display a superimposed image obtained by overlapping an image screen (a sub screen) of the contents read out from the BD disc d1 by the BD loader 26 and an image screen (a main screen) of the contents supplied from the BD player 3. The image displayed on the main screen and the sub screen can arbitrarily be selected by the user. Moreover, the display 24 can also display various messages provided to the user.

The speaker 25 outputs audio of the TV program received by the tuner unit 22, audio of the contents in the BD disc d1 read out by the BD loader 26, or audio of contents supplied from the BD player 3.

The BD loader 26 has an optical pick up (not shown) which reads out the data of the BD disc d1, a conveyance roller (not shown) which conveys the BD disc d1 inside the BD loader 26 and ejects it from the BD loader 26, and a conveyance roller drive unit (not shown) which drives the conveyance roller. When the BD disc d1 which stores the contents is put inside of the BD loader 26, the BD loader 26 reads out the contents from the BD disc d1 using the optical pick up and performs a processing to output the contents read out from the BD disc d1 to the main IC 20. The BD loader 26 and the main IC 20 perform communication using UART (Universal Asynchronous Receiver Transmitter).

The conveyance roller conveys the BD disc d1 inside the BD loader 26 and conveys the BD disc d1, which is put into the BD loader 26, outside of the BD loader 26. The conveyance roller drive unit can drive the conveyance roller to rotate in a direction of conveying the BD disc d1 inside the BD loader 26. Moreover, when the user instructs to eject the BD disc d1 by operating the remote controller 5, for example, the conveyance roller drive unit can drive the conveyance roller to rotate in a direction of ejecting the BD disc d1 outside of the BD loader 26.

The remote control signal receiving unit 27 converts the infrared signals received from the remote controller 5 into electrical signals and transmits the electrical signals to the main IC 20. The external interface 29 has a HDMI terminal (not shown), to which the external equipment compatible with HDMI is connected, and a USB (Universal Serial Bus) terminal (not shown). The external interface 29 transfers data received from the external equipment to the main IC 20. One end portion of the HDMI cable 4 which is connected to the BD player 3 is connected to the above HDMI terminal.

The main IC 20 performs an image output processing to output the image signals to the display 24, an audio output processing to output the audio signals to the speaker 25, a communication control processing to perform communication by the CEC command, a reproduction control processing to reproduce the contents read out from the BD loader 26, a disc detection processing, and so on. Moreover, the main IC 20, which controls the various units of the TV receiver 2 in accordance with the electrical signals transferred from the remote control signal receiving unit 27, has plural operation modes such as a normal operation mode, reception standby mode, and so on.

The reception standby mode is an operation mode of waiting for the CEC command transmitted from the BD player 3 or the infrared signals transmitted from the remote controller 5 while turning off the power to the tuner unit 22, the decoder unit 23, the display 24, the speaker 25, the BD loader 26, and so on.

In the communication control processing, the main IC 20 transmits and receives the CEC command and the response data based on HDMI-CEC to and from the BD player 3 and receives the image signals and the audio signals transmitted from the BD player 3. The CEC command includes the command from the TV receiver 2 to the BD player 3 to reproduce the BD disc d2 put in the BD player 3, for example.

In the disc detection processing, the main IC 20 detects whether or not the BD disc d1 is put in the BD loader 26 in the TV receiver 2. In particular, when the contents can be read out by operating the BD loader 26, the main IC 20 determines that the BD disc d1 is put in the BD loader 26.

As shown in FIG. 2, the BD player 3 includes a HDMI terminal 31, a remote control signal receiving unit 32, a BD loader 33, and a main IC 30.

The other end portion of the HDMI cable 4 which is connected to the TV receiver 2 is connected to the HDMI terminal 31. The HDMI terminal 31 transfers the CEC command or the contents received from the TV receiver 2 to the main IC 30. Moreover, the HDMI terminal 31 transmits the CEC command or the contents to the TV receiver 2.

The remote control signal receiving unit 32 converts the infrared signals received from the remote controller 5 into electrical signals and transmits the electrical signals to the main IC 30. When the BD disc d2 storing the contents is put into the BD loader 33, the BD loader 33 reads out the contents from the BD disc d2 and performs a processing to output the contents to the main IC 30.

The main IC 30 performs a reproduction control processing to reproduce the contents, a communication control processing to communicate by the CEC command, and so on. Moreover, the main IC 30 controls the various units of the BD player 3 in accordance with the electrical signals transferred from the remote control signal receiving unit 32.

In the reproduction control processing, the main IC 30 reproduces the contents read out from the BD loader 33 and outputs the image signals and the audio signals of the reproduced contents to the TV receiver 2 via the HDMI cable 4.

In the communication control processing, the main IC 30 transmits and receives the CEC command and the response data based on HDMI-CEC standard to and from the TV receiver 2, and transmits the image signals and the audio signals of the contents to the TV receiver 2. The CEC command includes not only the command to the TV receiver 2 to display the contents supplied from the HDMI terminal to which the BD player 3 is connected but also the command to the TV receiver to switch the operation mode from the reception standby mode to the normal operation mode.

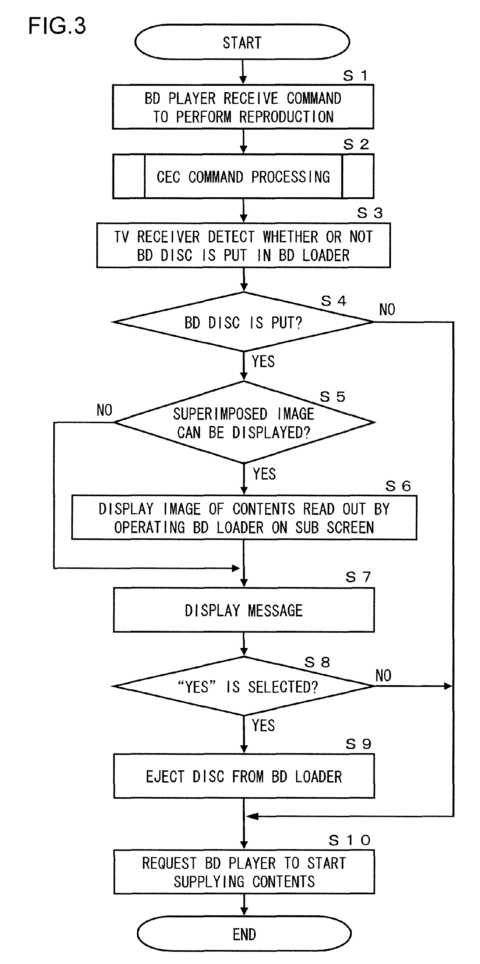

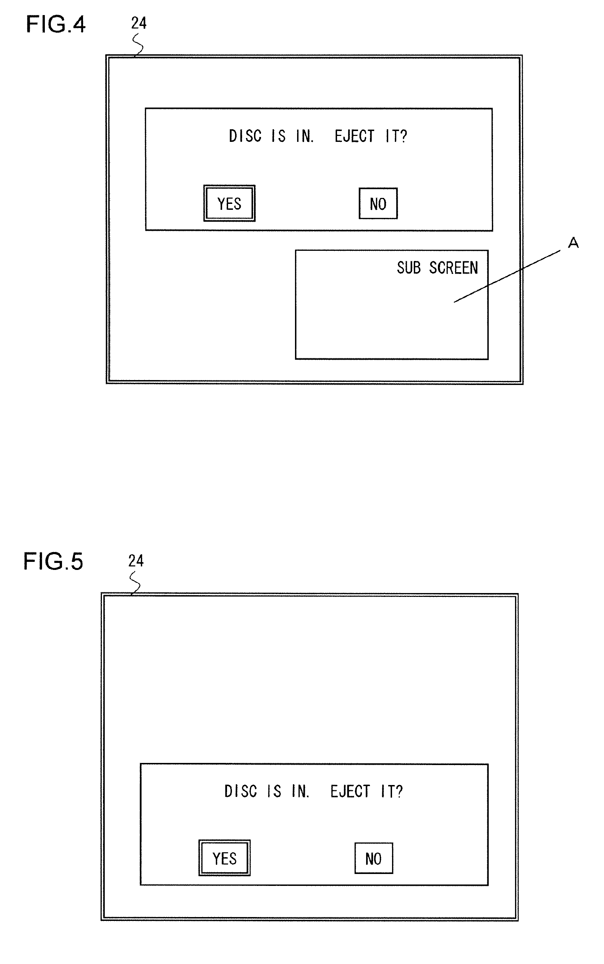

Next, a process of the disc detection processing in the TV receiver is described with reference to FIGS. 3 to 5. FIG. 3 is a flow chart showing the process of the disc detection processing. FIG. 4 shows an example of a message to select a disc ejection displayed on the display 24, and FIG. 5 shows another example of the message to select the disc ejection displayed on the display 24. Let's suppose that the BD disc d2 is put in the BD loader 33 in the BD player 3, and user instructs the BD player 3 to perform the reproduction by operating the remote controller 5. Furthermore, let's suppose that the TV receiver 2 is operating in the reception standby mode.

At first, when the main IC 30 in the BD player 3 receives the command to perform the reproduction from the remote controller 5 (S1), the main IC 30 performs a CEC command processing to transmit the CEC command for instructing the TV receiver 2 to turn the power on (switch to the normal operation mode) (S2).

Subsequently, the main IC 20 in the TV receiver 2 detects whether or not the BD disc d1 is put in the BD loader 26 (S3). As a result of the detection, when the BD disc d1 is put in the BD loader 26 (YES in S4) and also when the display 24 can display the superimposed image (YES in S5), the main IC 20 make the BD loader 26 operate and displays the image of the contents read out from the BD disc d1 on the sub screen of the display 24 (S6).

Then, the main IC 20 in the TV receiver 2 informs that the BD disc d1 is put in the BD loader 26, and displays a message which prompts the user to select whether or not to eject the BD disc d1 on the display 24 (S7). In particular, as shown in FIG. 4, the messages of "DISC IS IN. EJECT IT?", "YES", and "NO", for example, are displayed on the display 24.

At this time, the image of the contents of the BD disc d1 put in the BD loader 26 is displayed on a sub screen A of the display 24. In contrast, when the display 24 cannot display the superimposed image (NO in S5), the processing of the above S6 is not performed, but only the messages of "DISC IS IN. EJECT IT?", "YES", and "NO" are displayed on the display 24, as shown in FIG. 5 (S7).

When "YES" is selected by the user (YES in S8), the main IC 20 in the TV receiver 2 makes the conveyance roller and the conveyance roller drive unit of the BD loader 26 operate and ejects the BD disc d1 (S9). Then, the main IC 20 transmits the CEC command to request the BD player 3 to start supplying the contents (S10). In contrast, when "NO" is selected by the user (NO in S8), the main IC 20 in the TV receiver 2 does not perform the processing of the above S9 but performs the processing of the above S10.

In contrast, as a result of the above S3, when the BD disc d1 is not put in the BD loader 26 (NO in S4), the main IC 20 in the TV receiver 2 does not perform the processing of the above S5 to S9 but performs the processing of the above S10.

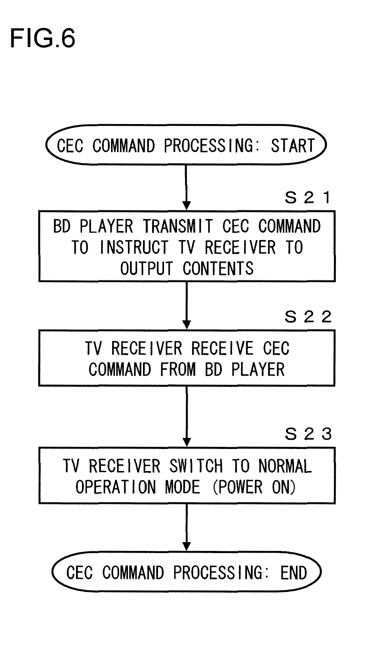

Next, details of the above CEC command processing is described with reference to the flow chart illustrated in FIG. 6.

At first, the main IC 30 in the BD player 3 transmits the CEC command for instructing the TV receiver 2 to output the contents, which is supplied from the HDMI terminal of the external interface 29 connected to the BD player 3, from the display 24 and the speaker 25 (S21).

When the main IC 20 in the TV receiver 2 receives the CEC command transmitted from the BD player 3 in the above S21 (S22), the main IC 20 switches the operation mode from the reception standby mode to the normal operation mode (turn the power on) (S23). That is to say, the main IC 20 switches to be able to output the contents supplied from the BD player 3.

As describe above, according to the TV receiver 2 of the present preferred embodiment, when the TV receiver 2 detects that the BD disc d1 is put in the BD loader 26 at a time of receiving the CEC command for displaying the image of the contents of the BD disc d2, which is supplied from the BD player 3, the TV receiver 2 displays the message on the display 24 to inform the user that the BD disc d1 is put in the BD loader 26. Thus, the user can recognize whether or not the BD disc d1 is put in the BD loader 26 in the TV receiver 2 even when reproducing the BD disc d2 on the BD player 3, so that the TV receiver 2 of the present embodiment can make it possible to reduce time and effort of the user required for finding the BD disc d1. Moreover, it can prevent the user from forgetting to eject the BD disc d1 which is put in the BD loader 26 in the TV receiver 2.

Moreover, when detecting that the BD disc d1 is put in the BD loader 26 in the TV receiver 2, the TV receiver 2 reproduces the BD disc d1 and displays the image of the contents on the display 24. Thus, the user can easily confirm what kind of contents the BD disc d1, which is put in the BD loader 26, stores. Accordingly, the TV receiver 2 can make it possible to further reduce the time and the effort of the user required for finding the BD disc which stores the desired contents.

Furthermore, because the TV receiver 2 and the BD player 3 transmit and receive the CEC command based on HDMI-CEC, an introduction cost of a specialized equipment or a specialized software corresponding to an original protocol is not required. Consequently, a manufacturing cost of the TV receiver 2 can be suppressed.

The present invention is not limited to the configuration of the above preferred embodiment, however, various modification are applicable within the scope of the invention. For example, in the above preferred embodiment, the optical disc in claims is described as the BD disc, however, it is not limited to the BD disc but the optical disc such as CD or DVD is also applicable.

Moreover, in the above preferred embodiment, when the BD disc is put in, the message is displayed on the display of the TV receiver to inform the user, however, the method of informing the user is not limited to it but it is also applicable to output an audio message from the speaker to inform the user.

Moreover, in the above preferred embodiment, the external reproduction equipment in claims is described as the BD player, however, any AV equipment is also applicable as long as it can transmit and receive the CEC command and reproduce the optical disc put inside.

## Claims

1. An image display equipment, which is connected to an external reproduction equipment reproducing an optical disc and supplying contents of the optical disc, comprising:
a transmitting and receiving means which not only receives the contents but also transmits and receives a control command based on a control protocol to and from the external reproduction equipment;
a display means which displays an image including an image of the contents and various messages;
an information means which informs a user of various messages;
a disc loader to which an optical disc is put inside to read out contents from the optical disc; and
a control means which controls units in the image display equipment,
**characterized in that**
the image display equipment further comprises a disc detection means which detects whether or not the optical disc is put in the disc loader, wherein
in the case where an optical disc put in the disc loader is detected by the disc detection means when the transmitting and receiving means receives from the external reproduction equipment a control command for instructing to display on the display means the image of the contents of the optical disc, which is supplied from the external reproduction equipment, the control means informs the user that the optical disc is put in the disc loader using the information means.

2. The image display equipment according to claim 1, wherein in the case where an optical disc put in the disc loader is detected by the disc detection means when the external interface receives from the external reproduction equipment a control command for instructing to display the image of the contents of the optical disc on the display means, the control means reproduces the optical disc put in the disc loader to display the image of the contents of the optical disc on the display means.

3. The image display equipment according to one of claims 1 and 2, wherein
the control protocol is HDMI (High Definition Multimedia Interface)- CEC (Consumer Electronics Control).

4. The image display equipment according to one of claims 1, 2, and 3, wherein
the image display equipment is a television receiver.
